# EUROPÄISCHE PATENTSCHRIFT

(11) **EP 1 950 089 B1**
(45) Veröffentlichungstag und Bekanntmachung des Hinweises auf die Patenterteilung: **01.04.2009**
(21) Anmeldenummer: 07001404.8
(22) Anmeldetag: 23.01.2007
(51) Int. Cl.: B60Q 1/48, B60Q 1/14

(54) **Fahrzeugbeleuchtung**
Vehicle illumination
Eclairage de véhicule

(43) Veröffentlichungstag der Anmeldung: 30.07.2008
(73) Patentinhaber: Delphi Technologies, Inc., Troy, Michigan 48007 (US)
(72) Erfinder: Woeste, Guido, 58332 Schwelm (DE); Bäumer, Peter, 44879 Bochum (DE)
(74) Vertreter: Robert, Vincent

(56) Entgegenhaltungen:
- EP-A2- 0 072 406
- WO-A-93/10550
- DE-A1- 3 939 240
- DE-A1- 10 103 702
- GB-A- 1 567 306

## Beschreibung

Die Erfindung betrifft ein Verfahren zur Steuerung einer Fahrzeugbeleuchtung bei ausgeschalteter Fahrzeugzündung.

Fahrzeugbeleuchtungen von Personenkraftfahrzeugen, Motorrädern und Lastkraftwagen dienen bei eingeschalteter Fahrzeugzündung im Wesentlichen der Beleuchtung des Fahrwegs und der besseren Wahrnehmbarkeit des Fahrzeugs durch andere Verkehrsteilnehmer. Moderne Fahrzeugbeleuchtungen umfassen Frontscheinwerfer, Heckleuchten, Richtungsgeber und ggf. zusätzliche Positionsleuchten, um den Umfang des Fahrzeugs kenntlich zu machen.

Bei ausgeschalteter Fahrzeugzündung hingegen werden Fahrzeugbeleuchtungen bevorzugt komplett abgeschaltet, um einem Entladen der Fahrzeugbatterien vorzubeugen. Um an schlecht beleuchteten Standorten eines Fahrzeugs das Risiko einer unbeabsichtigten Beschädigung zu vermindern, bieten Fahrzeuge Möglichkeiten zur permanenten Aktivierung eines Parklichts. Diese Lösung hat die Nachteile, dass das Parklicht explizit eingeschaltet werden muss, um das Risiko einer unbeabsichtigten Beschädigung zu vermindern, und dass ein permanent eingeschaltetes Parklicht zur Entladung der Fahrzeugbatterie beiträgt.

Die GB-A-1 567 306 offenbart ein Verfahren nach dem Oberbegriff des Anspruchs 1.

In der DE 101 03 702 A1 ist eine Elektronik zur Ansteuerung und Auswertung von Lichtquellen, vorzugsweise LEDs, offenbart. Einfallendes Fremdlicht kann mit Hilfe von LEDs, aus denen eine Fahrzeugleuchte aufgebaut ist, gemessen werden und von der Elektronik zur Implementierung einer selbsttätigen automatischen Parklichtschaltung verwendet werden.

Der Erfindung liegt die Aufgabe zugrunde, ein Verfahren zur Steuerung einer Fahrzeugbeleuchtung bei ausgeschalteter Fahrzeugzündung zu schaffen, das zur Verminderung des Risikos einer unbeabsichtigten Beschädigung eines abgestellten Fahrzeugs bei einer möglichst geringen Belastung der Fahrzeugbatterie beiträgt.

Zur Lösung der Aufgabe ist ein Verfahren mit den Merkmalen von Anspruch 1 vorgesehen.

Das erfindungsgemäße Verfahren zur Steuerung einer Fahrzeugbeleuchtung bei ausgeschalteter Fahrzeugzündung überwacht die von einem Helligkeitssensor bereitgestellten Helligkeitswerte im Bereich der Fahrzeugfront und des Fahrzeughecks, schaltet die Parklichtfunktion des Frontscheinwerfers und/oder der Heckleuchte in Abhängigkeit von den Helligkeitswerten selektiv ein und nach Ablauf einer voreingestellten Zeitspanne und/oder bei konstanten Helligkeitswerten wieder aus. Dabei erfolgt das selektive Einschalten der Parklichtfunktion nur, wenn eine detektierte Lichtintensitäts-Differenz zwischen Fahrzeugfront und Fahrzeugheck bzw. zwischen gegenüberliegenden Fahrzeugseiten einen vordefinierten Wert überschreitet.

Die Fahrzeugbeleuchtung wird aktiviert, wenn ein Unterschied in den oder eine Änderung bei den Helligkeitswerten im Bereich der Fahrzeugfront und des Fahrzeughecks oder zwischen gegenüberliegenden Fahrzeugseiten festgestellt wird. Dieser Unterschied bzw. diese Änderung kann durch ein sich näherndes Fahrzeug verursacht werden, dessen Frontscheinwerfer das abgestellte Fahrzeug erfassen. Nach Ablauf einer vordefinierten Zeitspanne und/oder sobald im Bereich der Fahrzeugfront und des Fahrzeughecks wieder konstante Helligkeitswerte gemessen werden, schaltet die Fahrzeugbeleuchtung die Parklichtfunktion wieder aus.

Das erfindungsgemäße Verfahren belastet die Fahrzeugbatterie weit weniger stark als ein permanent eingeschaltetes Parklicht. Zudem wird das Risiko einer unbeabsichtigten Beschädigung des abgestellten Fahrzeugs wesentlich verringert, da das menschliche Auge auf eine Helligkeitsänderung stärker anspricht als auf eine permanente Lichtquelle, und ein Fahrer ein abgestelltes Fahrzeug, dessen Parklicht sich einschaltet, somit mit größerer Wahrscheinlichkeit wahrnimmt.

Die Steuerung, die für das erfindungsgemäße Verfahren benötigt wird, kann durch ein separates Modul, beispielsweise eine mikroprozessorbasierte Einheit realisiert werden, oder vorzugsweise in eine bereits vorhandene elektronische Steuerungseinheit integriert werden.

Zur Durchführung des Verfahrens kann ein Helligkeitssensor in die Frontbeleuchtungseinheit und/oder die Heckbeleuchtungseinheit eingebaut sein, beispielsweise in einen Scheinwerfer, einen Blinker, eine Parkleuchte, eine Positionsleuchte, eine Nummernschildleuchte oder dergleichen. Die Erfassung von Helligkeitswerten im Bereich der Fahrzeugfront und des Fahrzeughecks kann dadurch kostengünstiger und präziser erfolgen als bei Verwendung eines Helligkeitssensors, der beispielsweise im Rückspiegel eingebaut sein kann, da kein zusätzliches Bauteil benötigt wird und der Sensor näher bei dem jeweiligen Überwachungsbereich liegt.

Ferner kann eine Leuchtdiode einer Frontbeleuchtungseinheit und/oder einer Heckbeleuchtungseinheit als Helligkeitssensor verwendet werden, da eine nicht bestromte Leuchtdiode wie eine Photozelle wirkt. Bei modernen Fahrzeugen, die im Bereich der Fahrzeugbeleuchtung vorzugsweise mit Leuchtdioden ausgestattet sind, entfällt damit die Bereitstellung zusätzlicher Sensoren.

Es kann auch eine Parklichtfunktion vorgesehen werden, bei der das Einschalten eines Parklichts, einer Positionsleuchte und/oder der Betrieb einer Frontbeleuchtungseinheit oder einer Heckbeleuchtungseinheit mit verminderter Intensität in Bezug auf einen Normalbetrieb des Leuchtmittels erfolgt. Somit kann die Batteriebelastung aufgrund der Parklichtfunktion weiter verringert werden, ohne das Risiko einer unbeabsichtigten Beschädigung zu erhöhen.

Eine bevorzugte Ausführungsform des erfindungsgemäßen Verfahrens schaltet nur die Parklichtfunktion derjenigen Leuchten ein, die dem sich nähernden Fahrzeug zugewandt sind, also z.B. nur die Frontbeleuchtungseinheit oder nur die Heckbeleuchtungseinheit, um damit die Batteriebelastung aufgrund der Parklichtfunktion weiter zu verringern.

Bei einer weiteren bevorzugten Ausführungsform des erfindungsgemäßen Verfahrens erfolgt das Ein- und Ausschalten der Parklichtfunktion durch Dimmen. Neben einer schonenden Behandlung der elektrischen Komponenten der Fahrzeugbeleuchtung vermeidet das durch das Dimmen veranlasste sanfte Aufleuchten der beteiligten Leuchtmittel eine unbeabsichtigte Irritation des Fahrzeuglenkers eines sich nähernden Fahrzeugs.

Eine weitere bevorzugte Ausführungsform des erfindungsgemäßen Verfahrens schaltet nur die Parklichtfunktion des linken oder rechten Teils der Front- und Heckbeleuchtungseinheit ein, wenn sich ein Fahrzeug mit eingeschaltetem Licht nähert. Auf diese Weise wird das Verfahren einer Position des abgestellten Fahrzeugs am Straßenrand optimal gerecht, bei der vom Fahrer des sich nähernden Fahrzeugs nur die Leuchten des parkenden Fahrzeugs wahrgenommen werden können, die zur Fahrbahn zeigen. Neben einer optimalen Wahrnehmung des parkenden Fahrzeugs durch den Fahrer wird bei dieser Ausführungsform die Batteriebelastung weiter reduziert. Die Auswahl der im Bedarfsfall zu beleuchtenden Fahrzeugseite kann manuell, beispielsweise durch Einlegen eines Blinkerhebels, oder bevorzugt automatisch erfolgen. Bei automatischer Auswahl kann ein zusätzlicher Helligkeitssensor zur Überwachung der Helligkeit z.B. im Bereich der Fahrzeugfront und/oder des Fahrzeughecks vorgesehen werden, um aufgrund von Pegelunterschieden bei den gemessenen Helligkeitswerten der Helligkeitssensoren zu entscheiden, welche Fahrzeugseite beleuchtet werden soll.

Eine weitere Ausführungsform des erfindungsgemäßen Verfahrens ermittelt anhand der gemessenen Umgebungshelligkeit, ob die Parklichtfunktion aktiviert werden soll. Bei hohen Helligkeitswerten, die Tageslicht entsprechen, ist eine Aktivierung der Parklichtfunktion nicht notwendig und findet daher nicht statt. Am Abend, in der Nacht oder an einem dunklen Standort hingegen ist die Parklichtfunktion vorteilhaft und wird daher automatisch aktiviert.

Nachfolgend wird die Erfindung rein beispielhaft anhand einer vorteilhaften Ausführungsform und unter Bezugnahme auf die beigefügte Zeichnung beschrieben. Es zeigen:
- Fig. 1: Eine schematische Darstellung einer Fahrzeugbeleuchtung; und
- Fig. 2a - 2c: Skizzen, welche die Funktionsweise der Fahrzeugbeleuchtung darstellen.

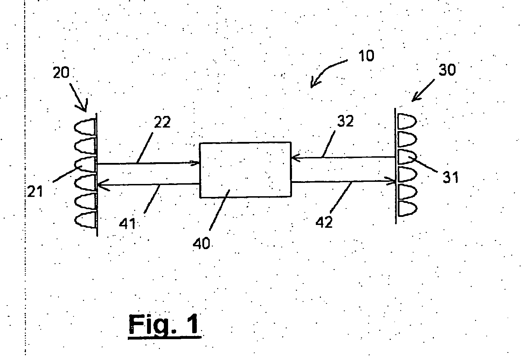

Fig. 1 zeigt eine schematische Darstellung einer Fahrzeugbeleuchtung 10 mit Frontbeleuchtungseinheit 20, Heckbeleuchtungseinheit 30 und Steuerung 40. Die Frontbeleuchtungseinheit 20 und die Heckbeleuchtungseinheit 30, bei denen es sich um Scheinwerfer, Blinker, Parkleuchten, Positionsleuchten, Nummernschildleuchten und dergleichen handeln kann, sind jeweils aus mehreren Leuchtdioden aufgebaut. Um die Beleuchtungsstärke bzw. die Lichtintensität im Frontbereich des Fahrzeugs zu messen, dient eine Leuchtdiode 21 der Frontbeleuchtungseinheit 20 im ausgeschalteten Zustand im Photozellenbetrieb als Helligkeitssensor für den Frontbereich des Fahrzeugs, in dem die Fahrzeugbeleuchtung verwendet wird. Auf ähnliche Weise dient eine Leuchtdiode 31 der Heckbeleuchtungseinheit 30 im ausgeschalteten Zustand als Helligkeitssensor für den Heckbereich des Fahrzeugs. Die als Helligkeitssensoren dienenden Leuchtdioden 21 und 31 formen die jeweils gemessenen Helligkeitswerte in Spannungspegel um und leiten diese Spannungspegel über Leitungen 22 und 32 an die Steuerung 40 weiter, die wiederum über Leitungen 41 und 42 die Parklichtfunktion der Frontbeleuchtungseinheit bzw. der Heckbeleuchtungseinheit ein- und ausschalten kann. Die Leitungen 22, 32, 41 und 42 können Einzeladern oder vorzugsweise Teil eines fahrzeuginternen Bussystems sein. Die Steuerung 40 ist in der vorteilhaften Ausführungsform ein herkömmlicher Controller, in den die neue Funktionalität des erfindungsgemäßen Verfahrens zur Steuerung einer Fahrzeugbeleuchtung integriert wird.

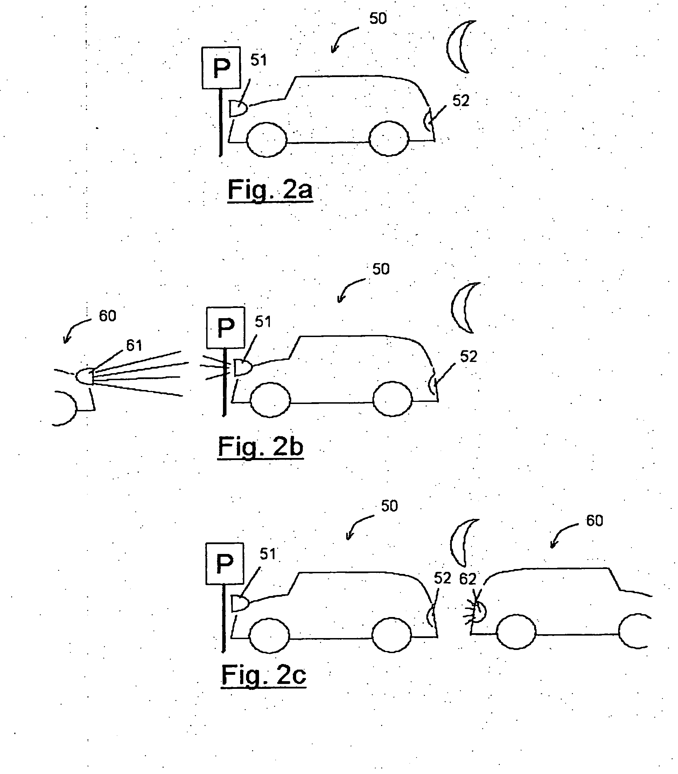

Fig. 2 zeigt anhand von Skizzen die prinzipielle Arbeitsweise des erfindungsgemäßen Verfahrens zur Steuerung einer Fahrzeugbeleuchtung bei ausgeschalteter Fahrzeugzündung. In Fig. 2a ist ein parkendes Fahrzeug 50 gezeigt, dessen Frontbeleuchtungseinheit 51 und Heckbeleuchtungseinheit 52 ausgeschaltet sind.

Wenn sich, wie in Fig. 2b gezeigt ist, ein fahrendes Fahrzeug 60 mit eingeschalteten Frontscheinwerfem 61 von vorne nähert und dabei wie gezeigt den Frontbereich des parkenden Fahrzeugs beleuchtet, dann ändert sich der von der als Helligkeitssensor verwendeten Leuchtdiode 21 in der Frontbeleuchtungseinheit gelieferte Spannungswert deutlich, während der entsprechende Spannungswert, der von dem Helligkeitssensor 31 in der Heckbeleuchtungseinheit geliefert wird, im Wesentlichen gleich bleibt. Die Steuerung 40 detektiert die Änderung und bildet die Differenz der gelieferten Spannungspegel. Diese übersteigt einen Schwellenwert, und somit reagiert das erfindungsgemäße Verfahren mit einer selektiven Aktivierung der Parklichtfunktion der Frontbeleuchtungseinheit 51. Dadurch wird die Frontbeleuchtungseinheit 51 z.B. über ein Dimmen sanft mit verminderter Intensität eingeschaltet, während die Heckbeleuchtungseinheit 52 dunkel bleibt.

Sobald das fahrende Fahrzeug 60 das parkende Fahrzeug 50 passiert hat, schaltet die Steuerung die eingeschaltete Parklichtfunktion der Frontbeleuchtungseinheit 51 wieder sanft aus. Der Abschaltvorgang wird eingeleitet, sobald eine eingestellte Zeitspanne abgelaufen ist. Alternativ kann der Abschaltvorgang auch eingeleitet werden, wenn die Helligkeitssensoren 21 und 31 wieder annähernd konstante Werte liefern. Die Heckbeleuchtungseinheit 52 des parkenden Fahrzeugs bleibt dunkel, auch wenn durch die Lichter 61, 62 des fahrenden Fahrzeugs 60 etwas Licht auf die Heckbeleuchtungseinheit 52 und damit auf den darin enthaltenen Helligkeitssensor 31 fallen sollte, da der Helligkeits-Schwellenwert so gewählt ist, dass in diesem Fall die zur Aktivierung der Parklichtfunktion benötigte Helligkeits-Pegeldifferenz nicht erreicht wird.

Wenn sich das fahrende Fahrzeug 60 dem parkenden Fahrzeug 50 von dessen Heckseite her nähert (nicht dargestellt), dann wird analog die Parklichtfunktion der Heckbeleuchtungseinheit 52 des parkenden Fahrzeugs 50 aktiviert, während die Frontbeleuchtungseinheit 51 des parkenden Fahrzeugs 50 dunkel bleibt. Auf diese Weise werden nur die jeweils benötigten Leuchten aktiviert, wodurch das Risiko einer unbeabsichtigten Beschädigung des geparkten Fahrzeugs verringert wird. Andererseits bleibt die Batteriebelastung des parkenden Fahrzeugs gering.

Auf ähnliche Weise wird bei einer vorwiegend seitlichen Annäherung (nicht dargestellt) des fahrenden Fahrzeugs 60 an das parkende Fahrzeug 50, die beispielsweise dann vorliegen kann, wenn das parkende Fahrzeug 50 in einer Parkbucht parallel zur Fahrbahn abgestellt ist, sowohl die Parklichtfunktion der Frontbeleuchtungseinheit 51 als auch der Heckbeleuchtungseinheit 52 des parkenden Fahrzeugs 50 auf der Fahrzeugseite des parkenden Fahrzeugs 50 aktiviert, die zur Fahrbahn zeigt. Dies wird z.B. durch zusätzliche, nicht dargestellte Helligkeitssensoren bei der Frontbeleuchtungseinheit 51 und der Heckbeleuchtungseinheit 52 des parkenden Fahrzeugs erreicht, die von den Helligkeitssensoren 21 bzw. 31 beabstandet sind. Eine vorteilhafte Positionierung der Helligkeitssensoren besteht beispielsweise in beiden Frontscheinwerfern oder Blinkerleuchten oder anderen Leuchtenpaaren mit ausreichendem seitlichem Abstand voneinander. Auf diese Weise kann die Steuerung einen Helligkeitsunterschied an den Fahrzeugseiten detektieren und nur die jeweils benötigten Leuchten aktivieren, wodurch das Risiko einer unbeabsichtigten Beschädigung des geparkten Fahrzeugs verringert wird, während die Batteriebelastung des parkenden Fahrzeugs gering bleibt.

Falls das parkende Fahrzeug 50 im Bereich einer Straßenbeleuchtung abgestellt ist, die in der Abenddämmerung eingeschaltet wird, kann durch das Einschalten der Straßenbeleuchtung je nach den Lichtverhältnissen eine einmalige Aktivierung der Parklichtfunktion an der Front, am Heck oder an einer Fahrzeugseite erfolgen. Da nach dem zeitgesteuerten Ausschalten der Parklichtfunktion wieder annähernd konstante Lichtverhältnisse vorliegen, erfolgt eine erneute Aktivierung nur durch eine erneute größere Helligkeitsänderung, die beispielsweise durch ein sich näherndes Fahrzeug verursacht werden kann.

Das Dimmen, mit dem ein sanftes Ein- und Ausschalten der jeweiligen Leuchten ermöglicht wird, kann beispielsweise durch ein pulsweitenmoduliertes (PWM) Dimmverfahren erreicht werden.

Da moderne Fahrzeuge in der Regel bereits mit Beleuchtungssystemen ausgestattet sind, die als Leuchtmittel Leuchtdioden umfassen, und die jeweiligen Beleuchtungssysteme in der Regel über ein fahrzeuginternes Bussystem mit einer elektronischen Steuerungseinheit des Fahrzeugs verbunden sind, kann das erfindungsgemäße Verfahren zur Steuerung einer Fahrzeugbeleuchtung mit geringem Kostenaufwand integriert werden.

### Bezugszeichenliste

- 10: Fahrzeugbeleuchtung
- 20: Frontbeleuchtungseinheit mit Leuchtdioden
- 21: Leuchtdiode / Helligkeitssensor vorne
- 22: Sensorleitung zur Steuerung
- 30: Heckbeleuchtungseinheit mit Leuchtdioden
- 31: Leuchtdiode / Helligkeitssensor hinten
- 32: Sensorleitung zur Steuerung
- 40: Steuerung
- 41: Steuerungsleitung zur Frontbeleuchtungseinheit
- 42: Steuerungsleitung zur Heckbeleuchtungseinheit
- 50: parkendes Fahrzeug
- 51: Frontbeleuchtungseinheit des parkenden Fahrzeugs
- 52: Heckbeleuchtungseinheit des parkenden Fahrzeugs
- 60: fahrendes Fahrzeug
- 61: Frontbeleuchtungseinheit des fahrenden Fahrzeugs
- 62: Heckbeleuchtungseinheit des fahrenden Fahrzeugs

## Patentansprüche

1. Verfahren zur Steuerung einer Fahrzeugbeleuchtung bei ausgeschalteter Fahrzeugzündung, das die Schritte umfasst:
Überwachen von Helligkeitswerten im Bereich einer Fahrzeugfront und eines Fahrzeughecks;
selektives Einschalten einer Parklichtfunktion einer Frontbeleuchtungseinheit (51, 20) und/oder einer Heckbeleuchtungseinheit (52, 30) in Abhängigkeit von den Helligkeitswerten; und
Abschalten der Parklichtfunktion nach Ablauf einer voreingestellten Zeitspanne und/oder bei konstanten Helligkeitswerten,
**dadurch gekennzeichnet, dass**
das selektive Einschalten der Parklichtfunktion nur erfolgt, wenn eine detektierte Lichtintensitäts-Differenz zwischen Fahrzeugfront und Fahrzeugheck bzw. zwischen gegenüberliegenden Fahrzeugseiten einen vordefinierten Wert überschreitet.

2. Verfahren nach Anspruch 1,
**dadurch gekennzeichnet, dass**
eine Leuchtdiode (21, 31) einer Frontbeleuchtungseinheit (51, 20) und/oder einer Heckbeleuchtungseinheit (52, 30) als Helligkeitssensor verwendet wird.

3. Verfahren nach mindestens einem der Ansprüche 1 und 2,
**dadurch gekennzeichnet, dass**
das selektive Einschalten der Parklichtfunktion sowie das Abschalten der Parklichtfunktion durch ein Dimmen erfolgt.

4. Verfahren nach Anspruch 1 oder 3,
**dadurch gekennzeichnet, dass**
die Parklichtfunktion der Frontbeleuchtungseinheit (51, 20) selektiv eingeschaltet wird, wenn eine an der Fahrzeugfront gemessene Lichtintensität höher ist als eine Lichtintensität, die an dem Fahrzeugheck gemessen wird.

5. Verfahren nach mindestens einem der Ansprüche 1 bis 4,
**dadurch gekennzeichnet , dass**
die Parklichtfunktion der Heckbeleuchtungseinheit (52, 30) selektiv eingeschaltet wird, wenn eine an der Fahrzeugfront gemessene Lichtintensität niedriger ist als eine Lichtintensität, die an dem Fahrzeugheck gemessen wird.

6. Verfahren nach mindestens einem der vorherigen Ansprüche,
**dadurch gekennzeichnet , dass**
die Parklichtfunktion der linken oder rechten Frontbeleuchtungseinheit (51, 20) und/oder der linken oder rechten Heckbeleuchtungseinheit (52, 30) selektiv eingeschaltet wird, wenn eine an der linken oder rechten Fahrzeugseite gemessene Lichtintensität niedriger ist als eine Lichtintensität, die an der gegenüberliegenden Fahrzeugseite gemessen wird.

7. Verfahren nach mindestens einem der vorherigen Ansprüche,
**dadurch gekennzeichnet, dass**
die Parklichtfunktion selektiv nur dann eingeschaltet wird, wenn eine detektierte Umgebungshelligkeit einen vordefinierten Wert unterschreitet.

## Claims

1. Process for the control of vehicle lighting when the vehicle ignition is switched off, which comprises the steps:
monitoring of brightness values in the region of a vehicle front and a vehicle rear;
selective switching on of a parking light function of a front lighting unit (51, 20) and/or a rear lighting unit (52, 30) as a function of the brightness values; and
switching off of the parking light function after passing of a preset period of time and/or at constant brightness values,
**characterised in that** the selective switching on of the parking light function only takes place when a detected light intensity difference between vehicle front and vehicle rear or between opposite vehicle sides exceeds a predefined value.

2. Process according to claim 1, **characterised in that** a light-emitting diode (21, 31) of a front lighting unit (51, 20) and/or of a rear lighting unit (52, 30) is used as the brightness sensor.

3. Process according to at least one of claims 1 and 2, **characterised in that** the selective switching on of the parking light function and the switching off of the parking light function is effected by dimming.

4. Process according to claim 1 or 3, **characterised in that** the parking light function of the front lighting unit (51, 20) is switched on selectively when a light intensity measured on the vehicle front is higher than a light intensity which is measured on the vehicle rear.

5. Process according to at least one of claims 1 to 4, **characterised in that** the parking light function of the rear lighting unit (52, 30) is switched on selectively when a light intensity measured on the vehicle front is lower than a light intensity which is measured on the vehicle rear.

6. Process according to at least one of the previous claims, **characterised in that** the parking light function of the left or right front lighting unit (51, 20) and/or of the left or right rear lighting unit (52, 30) is switched on selectively when a light intensity measured on the left or right vehicle side is lower than a light intensity which is measured on the opposite vehicle side.

7. Process according to at least one of the previous claims, **characterised in that** the parking light function is switched on selectively only when a detected ambient brightness does not reach a predefined value.

## Revendications

1. Procédé pour commander un éclairage de véhicule lorsque l'allumage du véhicule est coupé, comprenant les étapes suivantes :
surveillance de valeurs de luminosité dans la zone à l'avant et à l'arrière d'un véhicule ;
mise en marche sélective d'une fonction de feu de stationnement d'une unité d'éclairage avant (51, 20) et/ou d'une unité d'éclairage arrière (52, 30) en fonction des valeurs de luminosité ; et
coupure de la fonction de feu de stationnement après expiration d'une durée temporelle préréglée et/ou en cas de valeur de luminosité constante,
**caractérisé en ce que**
la mise en marche sélective de la fonction de feu de stationnement n'est effectuée que lorsqu'une différence détectée de l'intensité lumineuse entre l'avant et l'arrière du véhicule ou respectivement entre des côtés opposés du véhicule dépasse une valeur prédéfinie.

2. Procédé selon la revendication 1,
**caractérisé en ce que** l'on utilise à titre de détecteur de luminosité une diode électroluminescente (21, 31) d'une unité d'éclairage avant (51, 20) et/ou d'une unité d'éclairage arrière (52, 30).

3. Procédé selon l'une au moins des revendications 1 et 2,
**caractérisé en ce que** la mise en marche sélective de la fonction de feu de stationnement ainsi que la coupure de la fonction de feu de stationnement sont effectuées par gradation.

4. Procédé selon la revendication 1 ou 3,
**caractérisé en ce que** la fonction de feu de stationnement de l'unité d'éclairage avant (51, 20) est mise en marche de manière sélective quand une intensité lumineuse mesurée à l'avant du véhicule est supérieure à une intensité lumineuse mesurée à l'arrière du véhicule.

5. Procédé selon l'une au moins des revendications 1 a 4,
**caractérisé en ce que** la fonction de feu de stationnement de l'unité d'éclairage arrière (52, 30) est mise en marche de manière sélective quand une intensité lumineuse mesurée à l'avant du véhicule est inférieure à une intensité lumineuse mesurée à l'arrière du véhicule.

6. Procédé selon l'une au moins des revendications précédentes,
**caractérisé en ce que** la fonction de feu de stationnement de l'unité d'éclairage avant gauche ou droite (51, 20) et/ou de l'unité d'éclairage arrière gauche ou droite (52, 30) est mise en marche de manière sélective quand une intensité lumineuse mesurée sur le côté gauche ou droit du véhicule est inférieure à une intensité lumineuse mesurée sur le côté opposé du véhicule.

7. Procédé selon l'une au moins des revendications précédentes,
**caractérisé en ce que** la fonction de feu de stationnement n'est mise en marche de manière sélective que lorsqu'une luminosité ambiante détectée passe au-dessous d'une valeur prédéfinie.
